# EUROPEAN PATENT SPECIFICATION

(11) **EP 3 706 974 B1**
(45) Date of publication and mention of the grant of the patent: **17.06.2026**
(21) Application number: 18808123.6
(22) Date of filing: 25.10.2018
(51) Int. Cl.: B29C 48/255, B29C 48/44, B29B 7/48, B29B 7/74, B29C 48/25, B29C 48/435, B29C 48/425

(54) **PLANETARY MIXING DEVICE AND METHOD OF PRODUCTION OF AN ELASTOMERIC COMPOUND**
PLANETENMISCHVORRICHTUNG UND VERFAHREN ZUR HERSTELLUNG EINER ELASTOMEREN VERBINDUNG
DISPOSITIF DE MÉLANGE PLANÉTAIRE ET PROCÉDÉ DE PRODUCTION D'UN COMPOSÉ ÉLASTOMÈRE

(30) Priority: 10.11.2017 IT 201700128440
(43) Date of publication of application: 16.09.2020
(73) Proprietor: Pirelli Tyre S.p.A., 20126 Milano (IT)
(72) Inventor: MONTEROSSO, Antonio, 20126 Milano (IT); SCURATI, Alberto, 20126 Milano (IT); TESTI, Stefano, 20126 Milano (IT)
(74) Representative: Tirloni, Bartolomeo
(86) International application number: PCT/IT2018/050207
(87) International publication number: WO 2019/092764

(56) References cited:
- DE-A1- 10 142 890
- DE-A1- 102006 002 176
- DE-A1- 2 521 774
- DE-A1- 4 017 558
- DE-B3- 102006 063 021
- US-B1- 6 506 447
- US-B1- 6 780 271

## Description

### Technical field of the invention

The present invention relates to the field of planetary mixing devices.

### State of the art

Document WO2005049750 describes a process for preparing a pressure sensitive adhesive using a planetary roller extruder comprising a central spindle surrounded by, and intermeshed with, a plurality of planetary spindles. Document DE4017558A1 describes a planetary mixing device comprising a stop ring.

### Summary of the invention

In the context of tyre production, the Applicant has perceived the opportunity to process the elastomeric compounds by means of planetary mixing devices, also called in the jargon 'planetary roller extruders'. These devices are continuous mixing devices, i.e. capable of processing the compounds with time continuity, producing a continuous flow of compound at the outlet, unlike the batch mixers which require the loading, processing and discharging of each batch.

Typically, the planetary mixing devices comprise two or more mixing sections in continuous succession, each section comprising a respective outer body or shell which defines a respective inner mixing chamber. A central spindle passes through all the inner chambers of the mixing sections, coaxially with the inner chambers. Each mixing section further comprises, housed in the respective inner chamber, a respective plurality of planetary spindles which surround, and are intermeshed with, the central spindle, so that a rotation of the central spindle (actuated by an engine of the mixing device) triggers, for each planetary spindle, a motion of (counter)-rotation about its own axis and a translational motion along a circular trajectory coaxial to the central spindle. The contact surfaces of the central spindle, of the planetary spindles and of the inner chambers are shaped to allow the planetary spindles to be intermeshed with the central spindle on one side and with the surface of the inner chamber on the other.

Typically, between a mixing section and the subsequent mixing section (and downstream of the last mixing section) it is placed a stop ring which has the main function of holding in place the planetary spindles of the mixing sections.

In this context, the Applicant has observed that the stop ring also performs the important function of influencing the passage of the compound between a mixing section and the subsequent one (or the exit from the last section). In particular, for a given cross section left free from the stop ring, the stop ring retains at a given extent the compound in the mixing section upstream of the ring, thus affecting the mixing intensity of the compound in this section.

The Applicant has observed that, given a predetermined free cross section, it is possible to vary the mixing intensity of a given compound, for example by varying some process parameters such as flow rate, thermal profile or rotation speed. However, the Applicant has observed that the degree of variation of the mixing intensity is in this case limited.

The Applicant has also observed that the operation of replacing a stop ring with another stop ring having different free cross section, in order to vary the mixing conditions, is particularly burdensome in terms of labor and/or machine downtime, as for example it requires the disassembly of at least the mixing section downstream of the stop ring.

In this context, the Applicant has faced the problem of making a planetary mixing device much more flexible to the processing of elastomeric compounds which vary in the composition and/or processing recipe, and which require very different mixing intensities, at the same time without reducing the productivity of the device and/or without increasing the production cost.

The Applicant has found that by placing between at least one pair of consecutive mixing sections of a planetary mixing device (and/or downstream of the last section) a stop ring whose free cross section can be varied within a given range, it is possible to vary considerably the mixing intensity of the elastomeric compound under processing (in particular in the upstream mixing section), in a simple and rapid manner, without the need for expensive interventions in terms of labor and/or machine downtime.

The present invention relates to a planetary mixing device according to claim 1.

The present invention further relates to a method of production of an elastomeric compound according to claim 14, and to a tyre production process according to claim 15.

The expression 'elastomeric compound' comprises both a finished elastomeric compound ready to be formed into a semi-finished element to be incorporated into a green tyre, and an intermediate compound which is subjected to further processing steps before being formed for incorporation into a green tyre (for example a mixture not yet complete of all the ingredients - such as a masterbatch,- or a mixture already complete of all the ingredients which is subjected to further mixing steps, in particular in a continuous mixing device). The expression "producing an elastomeric compound" comprises both the production of an elastomeric compound starting from its basic ingredients by introducing these ingredients into one or more mixing devices, and the re-processing of an elastomeric compound into one or more mixing devices with or without addition of further ingredients.

The terms "upstream", "downstream", "last" and the like refer to the flow direction of the compound under processing into the mixing device.

The terms 'radial', 'radially internal', 'radially external' and the like refer to a generic direction moving away from the central axis. The term 'transversal' identifies a generic direction perpendicular to the central axis. Therefore, by 'transversal plane' it is meant a plane perpendicular to the central axis.

The term 'free cross section' refers to the area left free by the stop ring mounted in the mixing device and crossed by the central spindle, this area being determined on the projection on a transversal plane of the central spindle and of the whole stop ring. In other words, the free cross section is the area defined by the transversal projection of the surface of the central spindle and by the transversal projection of the radially inner surface of the stop ring as a whole.

The Applicant has found that the present invention, in particular the adjustment device of the free cross section of the stop ring which varies in a controlled way the cross section between a mixing section and the mixing section immediately downstream by the movement of the movable elements housed in the stop ring, allows to modify the degree of retention of the compound under processing into the upstream mixing section and consequently the mixing intensity. The mixing device is therefore suitable to be used with great versatility for the processing of compounds which are very different from each other and which require a very different processing recipe. All of the above is obtained in a very simple, rapid and reliable way, by mechanical movement of the movable elements, without the need to disassemble or replace substantial portions of the mixing device.

Furthermore, the present invention optionally allows to vary the mixing intensity also during the processing of the same compound, for example following a feedback information generated by controls carried out on the compound produced by the mixing device and/or on process parameters and/or on elements and/or finished products produced using this compound.

The present invention may have one or more of the preferred features which are described below.

Preferably said adjustment device comprises at least three movable elements. Preferably said adjustment device comprises no more than ten movable elements, more preferably no more than six. The Applicant considers that three elements are sufficient, despite the small number, to vary the free cross section over a wide range of values, without excessive deformation of the geometry of the free cross section with respect to a perfectly circular shape. The Applicant further considers that by limiting the number of elements it is obtained the desired functionality in terms of variation of the free cross section, while maintaining structural simplicity and reliability, as well as reduced overall dimensions, particularly in the axial direction (thus also adapting the stop ring to the space available between a mixing section and the other).

The stop ring is configured so that each of said movable elements rotates on said transversal plane about a respective rotation axis parallel to said central axis. Preferably said rotation axes are offset with respect to the central axis. Preferably the rotation axes of the movable elements are mutually not coincident. More preferably the rotation axes of the movable elements are equally arranged along a circumference centred on the central axis. In this way a wide variation of the free cross section is obtained even with limited rotations, thereby helping to keep the overall dimensions of the ring reduced and furthermore to maintain the structure simple and reliable.

Preferably said rotation of the movable elements is synchronous. Preferably said rotation of the movable elements is central-symmetric with respect to the central axis. In this way the geometry of the free cross section remains substantially regular, without excessive deformation.

Preferably said stop ring comprises a housing body with (substantially) cylindrical symmetry with respect to said central axis and comprising a cylindrical wall and an end wall, preferably developing on a respective transversal plane, having a through opening, wherein the cylindrical wall and the end wall define a cavity which houses said plurality of movable elements. This housing body defines the overall dimensions of the ring.

Each movable element has a (substantially) plane annular shape with development along a respective transversal plane. Preferably the movable elements (and possibly the end wall) are stacked along the central axis in mutually contact, more preferably leaned against the end wall. In this way the overall dimensions are limited. Furthermore, the Applicant has verified that the compound does not remain trapped between the movable elements and/or the other elements of the stop ring.

Preferably each movable element has a respective through opening having area of transversal section including, or equal to, an area of transversal section of the through opening of the end wall. In this way, in the maximum opening configuration, the movable elements do not narrow the cross section defined by the end wall.

Preferably each movable element can rotate about a respective rotation axis integral to said end wall. For example, said respective rotation axis is made by a respective pin, belonging to one among the respective movable element (in peripheral position) and the end wall, which engages a respective hole, afforded in the other among the respective movable element (in peripheral position) and the end wall. In this way the movable elements are firmly guided in their movement.

Preferably the adjustment device comprises an actuator element configured to rotate, preferably about the central axis, to set in rotation the movable elements. In this way, a single actuator moves all the movable elements, with advantages in terms of simplicity, reliability and synchrony.

Preferably the actuator element comprises for each movable element a respective pin which engages a corresponding hole on said each movable element. In this way the rotation of the actuator element synchronously rotates the movable elements, ensuring reduced overall dimensions and/or reliability. Preferably said pins of the actuator element are equally arranged along a circumference centred on the central axis.

Preferably the hole and the pin of each movable element are mutually diametrically opposite.

Preferably the actuator element has an annular shape with development substantially on a transversal plane. Preferably also the actuator element is stacked together with the movable elements along the central axis, more preferably housed inside said cavity at opposite side of the movable elements with respect to said end wall. In this way the spaces are optimized.

Preferably the actuator element has a respective through opening having area of transversal section including, or equal to, an area of transversal section of the through opening of the end wall. In this way, in any configuration, the actuator element does not contribute to narrow the cross section.

Preferably the mixing device comprises an engine (for example an electric engine) coupled (directly or by the interposition of gear members) to said actuator element to set in rotation the actuator element about the central axis. Preferably the stop ring comprises gear members, more preferably with toothed parts (e.g. pinion/gear rack coupling), interposed between the engine and said actuator element. Preferably the mixing device comprises a command and control unit programmed and configured to control said engine. In this way, the adjustment of the free cross section can take place by mechanized and/or automated movement.

Preferably the stop ring (more preferably said gear members) comprises (comprise) a control rod having an axis of main development (more preferably substantially radial), wherein a radially internal end of the control rod is coupled to said actuator element so that a rotation of the control rod about its development axis induces a rotation of the actuator element.

Preferably said radially internal end is in contact with said actuator element, more preferably it is coupled to said actuator element through a gear coupling (e.g. pinion/gear rack coupling). Preferably a radially external end of the control rod is outside said housing body. Preferably the radially external end of the control rod is intermeshed with said engine. In this way it is possible to actuate the control rod from the outside, manually (in the absence of engine) or automatically (in the presence of engine). In an embodiment, the engine is placed inside the housing body.

Optionally the mixing device comprises one or more mixing sections further to the first and second mixing section and arranged in succession along the central axis together with the first and second mixing section, each further mixing section having one or more of the features stated for the first and second mixing section, wherein a respective further stop ring, having one or more of the aforesaid features stated for said stop ring, is interposed between one or more pairs of consecutive mixing sections. In this way the mixing device is configured coherently with the process to be performed, and the adjustable stop rings give additional versatility to the device. Optionally, the mixing device comprises a final stop ring having one or more of the aforesaid features stated for said stop ring and placed at a downstream end of a final mixing section of said succession of mixing sections. In this way it is possible to adjust the mixing intensity even in the last mixing section.

Preferably, said operation of adjusting the position of the elements for adjusting the free cross section is performed prior to the operation of producing the elastomeric compound by means of the device. In this way, the mixing device is configured according to a predefined adjustment specification for the compound under processing.

In an embodiment, said operation of adjusting the position of the elements to adjust the free cross section is performed (also) during the production of the elastomeric compound by means of the device. In this way it is possible to adjust in real time some mixing parameters, such as dwell time, pressure and/or temperature (for example, following feedback information as described above).

Further features and advantages will be more apparent from the detailed description of preferred embodiments of the present invention.

### Description of the figures

This description will be set out below with reference to the accompanying figures, in which:
- figure 1 shows a view from a transversal plane of a stop ring according to the present invention in the maximum cross section configuration;
- figure 2 shows the view of the stop ring of figure 1 in the minimum cross section configuration;

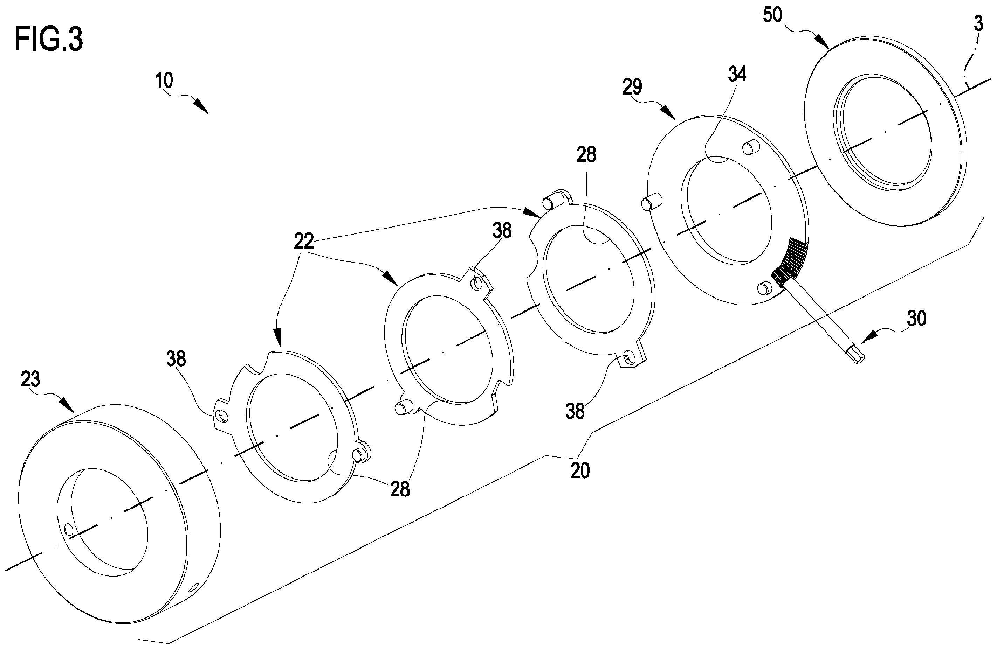

- figure 3 shows an exploded view of the stop ring of figure 1;

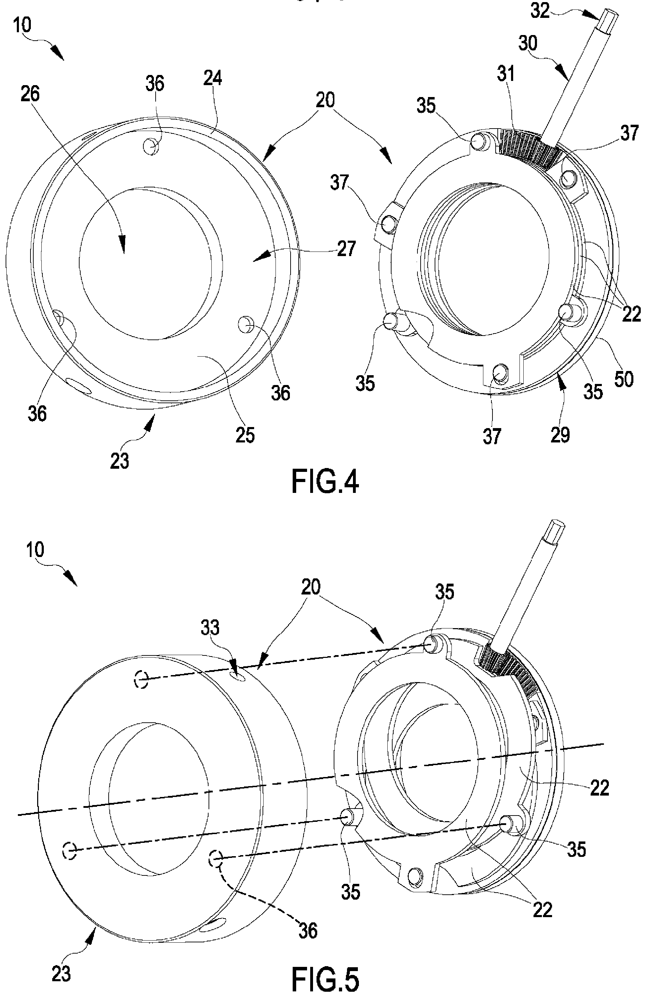

- figure 4 shows a partial exploded view of the stop ring of figure 1 in the maximum cross section configuration;
- figure 5 shows a partial exploded view of the stop ring of figure 2 in the minimum cross section configuration;
- figure 6 schematically shows a side view of a planetary mixing device according to the present invention.

### Detailed description of some embodiments

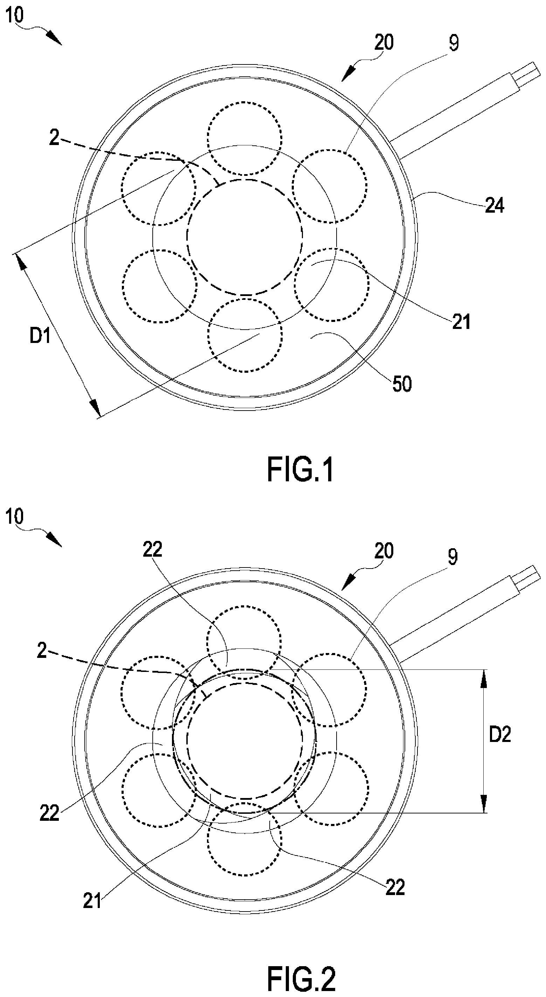

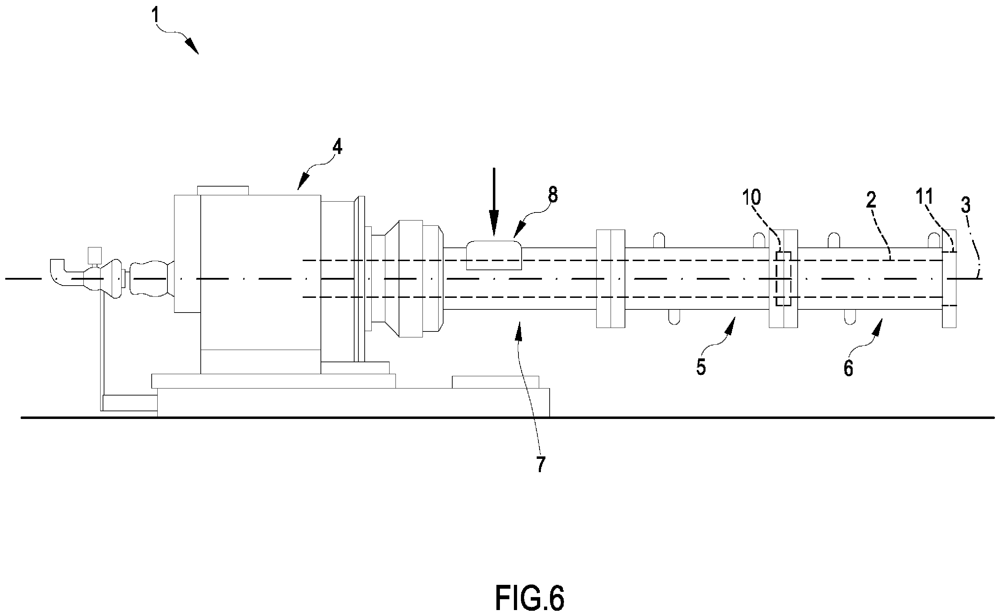

With reference to figure 6, a planetary mixing device 1 according to the present invention comprises a central spindle 2 (whose overall dimensions are indicated by dashed lines for illustrative purposes only) having development along a central axis 3 and an engine 4 configured to rotate the central spindle about the central axis. In Figures 1 and 2 it is shown in dashed lines the transversal section of the central spindle 2 at the stop ring, wherein typically the surface of the central spindle is smooth.

In the shown example, the device 1 comprises a first 5 and a second mixing section 6 arranged in succession one next to the other along the central axis 3. Furthermore, the device 1 comprises a feeding section 7, provided with a respective inner chamber, also crossed by the central spindle and a feeding mouth 8 for feeding the materials to be mixed/processed. Typically, in the feeding section 7 there are no planetary spindles, the radially inner surface of the inner chamber is smooth and the central spindle at this section has an external helical surface, as this section has the function of transporting the materials from the feeding mouth to downstream mixing sections, rather than mixing/processing. The present invention comprises any number of mixing sections of the type of sections 5 and 6, with or without the feeding section 7.

Each section 5, 6 comprises a respective inner chamber (not shown) cylindrical and coaxial with the central axis 3 and a respective plurality of planetary spindles 9 (not shown in detail, as for example of known type) arranged about, and intermeshed with, the central spindle and with the radially internal surface of the respective inner chamber. In Figures 1 and 2 it is shown in dashed lines the projection of the planetary spindles 9 (comprising the respective helix) on the respective transversal view. It is observed that the planetary spindles are not present at the stop ring, but rather rest on at least one of the end faces of the latter (i.e. on at least one among the end wall 25 and the cover 50).

In the shown example, the device 1 comprises a stop ring 10 interposed between the first and the second mixing section 5, 6 to maintain in position the planetary spindles 9 of the two mixing sections and a final stop ring 11 (for example equal to the stop ring 10) placed at a downstream end of the second mixing section 6, which is the final mixing section of the succession of sections 5, 6, to maintain in position the planetary spindles of the second mixing section. As mentioned, the present invention contemplates any number of stop rings 10, with or without the final stop ring 11, each interposed between a respective pair of mixing sections.

The stop ring 10 comprises an adjustment device 20 of the free cross section 21, defined as the area 21 left free on the projection on a transversal plane of the whole stop ring 10 and of the central spindle 2. In other words, after the projection on a transversal (i.e. perpendicular) plane to the central axis of the whole stop ring and of the central spindle (as in Figures 1 and 2), the free section corresponds to the area defined on such projection by the surface of the central spindle 2 and by the radially inner surface of the stop ring 10.

Preferably, the stop ring 10 comprises a housing body 23 with substantially cylindrical symmetry with respect to the central axis and comprising a cylindrical wall 24 and an end wall 25 arranged on a transversal plane and having a through opening 26, the cylindrical wall and the end wall defining a cavity 27 open both at said through opening 26 and at an axial end of the wall 24 opposite to the end wall.

Preferably, the adjusting device 20 comprises one or more elements 22 housed in the stop ring 10 and movable with respect to the central axis with at least one motion component on a transversal plane. In the shown example, the movable elements 22 are three, although in alternative forms (not shown) their number can range from two to ten and more. It is observed that the greater the number of movable elements, the more the geometric shape of the free cross section 21 approaches the annular shape, although this increases progressively the complexity and/or the dimension (especially axial) of the stop ring 10.

Preferably, the movable elements 22 are stacked along the central axis in mutual contact and are housed in the cavity 27, leaned against the end wall 25.

Preferably each movable element 22 has a substantially plane and annular shape with development along a respective transversal plane, each movable element having a respective through opening 28 having area of transversal section including, or (as in the shown example) equal to, the area of transversal section of the through opening 26 of the end wall.

Preferably each movable element 22 has a pin 35, in peripheral position, which engages a respective hole 36 afforded in the end wall 24. These fixed pins 35 define the rotation axes of the movable elements, parallel to the central axis 3. The rotation axes are preferably equally arranged along a circumference centred on the central axis. In an embodiment not shown and included in the present invention each movable element can have a respective hole engaged by a respective pin which protrudes from the end wall.

In an embodiment, not shown, the movable element or the movable elements have eccentric shape with respect to the central axis 3. In this case, their rotation (also about the central axis) produces a variation of the free cross section.

Preferably, the adjusting device 20 comprises an actuator element 29, ring shaped and substantially developing on the transversal plane, and a control rod 30 having a radial axis of development. The radially internal end 31 of the control rod is coupled to the actuator element so that a rotation of the control rod about its own axis of development induces a rotation of the actuator element about the central axis 3. Exemplarly the radially internal end is coupled to the actuator element by means of a coupling between a pinion (on the control rod) and a gear rack (on the inner surface of the actuator element). Preferably, the radially external end 32 of the control rod is outside the housing body (for example, by means of a through hole 33 formed in the wall 24 and crossed by the control rod 30). Preferably, although not shown, the stop ring comprises, or is associated with, an (electric) engine comprised in the mixing device, e.g. intermeshed (e.g., splined) to the control rod at the side of, or at, the radially external end 32.

Preferably, also the actuator element 29 is stacked together with the movable elements 22 along the central axis 3, and it is housed inside the cavity 27 at the opposite side of the movable elements with respect to the end wall 24.

Preferably, the actuator element 29 has a respective through opening 34 having area of transversal section including, or equal to (as in the shown example), an area of transversal section of the through opening 26 of the end wall 24.

Preferably, the actuator element 29 comprises for each movable element 22 a respective pin 37 which engages a corresponding hole 38 on said each movable element. Preferably the pins 37 of the actuator element are equally arranged along the circumference on which the pins 35 of the movable elements lie. Preferably the hole 38 and the pin 35 of each movable element are mutually diametrically opposite.

Preferably, the stop ring comprises a cover 50 arranged adjacent to (in contact with) the actuator element 29 on the opposite side with respect to the movable elements. The cover 50, also provided with a through opening similar to the through opening of the end wall, can be screwed to the housing body (for example to the end wall) by means of screws (not shown) which engage respective through holes (not shown) of the cover and which are screwed into respective threaded holes (not shown) afforded in the end wall.

In use, starting from a configuration of maximum free section (shown exemplarily in figure 1, wherein D1 indicates the diameter of the through openings 26, 28, 34, mutually aligned), by rotating the control rod 30 it is rotated the actuator element 29 which in turn synchronously rotates the movable elements about their respective rotation axis, eccentric with respect to the central axis 3. In this way the movable elements progressively engage, as their rotation increases, the initial free cross section, narrowing it. Figure 2 shows the configuration of minimum free section, wherein the diameter D2 of the circle equivalent to the area (three-lobed) circumscribed by the radially internal surfaces of the movable elements is equal to about 68% of D1.

## Claims

1. Planetary mixing device (1) comprising:
- a central spindle (2) having development along a central axis (3),
- an engine (4) configured to rotate the central spindle (2) about the central axis (3),
- a first (5) and a second mixing section (6) arranged in contiguous succession along the central axis (3), wherein each mixing section (5, 6) comprises a respective cylindrical inner chamber coaxial with the central axis (3) and a respective plurality of planetary spindles (9) arranged about, and intermeshed with, the central spindle (3), and
- a stop ring (10) interposed between the first and the second mixing section (5, 6) in order to maintain in position the planetary spindles (9) of the first and the second mixing section (5, 6),
wherein the stop ring (10) comprises an adjustment device (20) comprising a plurality of elements (22) housed in said stop ring (10), said elements (22) being movable with respect to the central axis (3) with at least a component of motion on a transversal plane, in order to vary a free cross section (21) between the first and the second mixing section (5, 6) as a function of the position of said elements (22),
**characterized in that** each movable element (22) has a plane annular shape with development along a respective transversal plane and is rotatable on said transversal plane about a respective rotation axis parallel to said central axis.

2. Device according to claim 1, wherein said adjustment device (20) comprises at least three movable elements (22) and/or not more than ten movable elements (22).

3. Device according to claim 1 or 2, wherein the rotation axes of the movable elements (22) are mutually not coincident and offset with respect to the central axis (3).

4. Device according to any one of the preceding claims, wherein the rotation axes of the movable elements (22) are equally arranged along a circumference centred on the central axis (3), wherein said rotation of the movable elements (22) is synchronous and central-symmetric with respect to the central axis (3).

5. Device according any one of the preceding claims, wherein the adjustment device (20) comprises an actuator element (29) configured to rotate about the central axis (3) to set in rotation the movable elements (22).

6. Device according to claim 5, wherein the actuator element (29) comprises for each movable element (22) a respective pin (37) which engages a corresponding hole (38) on said each movable element (22), wherein said pins (37) of the actuator element (29) are equally arranged along a circumference centred on the central axis (3).

7. Device according to any one of claims 5 and 6, wherein the actuator element (29) has annular shape with development on a transversal plane.

8. Device according to any one of the previous claims, wherein said stop ring (10) comprises a housing body (23) with cylindrical symmetry with respect to said central axis (3) and comprising a cylindrical wall (24) and an end wall (25) developing on a respective transversal plane and having a through opening (26), wherein the cylindrical wall (24) and the end wall (25) define a cavity (27) which houses said plurality of movable elements (22), wherein the movable elements (22) are stacked along the central axis (3) in mutually contact and leaned against the end wall (25).

9. Device according to claim 8 wherein each movable element (22) has a respective through opening (28) having area of transversal section including, or equal to, an area of transversal section of the through opening (26) of the end wall (25).

10. Device according to claim 8 or 9 wherein each movable element (22) can rotate about a respective rotation axis integral to said end wall (25), said respective rotation axis being made by a respective pin (35), belonging to one among the respective movable element (22) and the end wall (25), which engages a respective hole (36), afforded in the other among the respective movable element (22) and the end wall (25).

11. Device according to claim 5 and any one of claims 8 to 10, wherein also the actuator element (29) is stacked together with the movable elements (22) along the central axis (3) and housed inside said cavity (27) at opposite side of the movable elements (22) with respect to said end wall (25), and wherein the actuator element (29) has a respective through opening (34) having area of transversal section including, or equal to, an area of transversal section of the through opening (26) of the end wall (25).

12. Device according to claim 5 and any one of the previous claims, comprising an engine coupled to said actuator element (29) to set in rotation the actuator element (29) about the central axis (3), wherein the stop ring (10) comprises gear members interposed between the engine and said actuator element (29) and wherein the mixing device (1) comprises a command and control unit programmed and configured to control said engine.

13. Device according to claim 5 and any one of the previous claims, wherein the stop ring (10) comprises a control rod (30) having an axis of main development, wherein a radially internal end (31) of the control rod (30) is coupled to said actuator element (29) so that a rotation of the control rod about its development axis induces a rotation of the actuator element (29), wherein said radially internal end (31) is coupled to said actuator element (29) through a gear coupling and wherein a radially external end (32) of the control rod (30) is outside said housing body (23).

14. Method of production of an elastomeric compound, the method comprising:
- providing the planetary mixing device (1) according to any one of the previous claims;
- producing said elastomeric compound by means of said mixing device (1);
- wherein the method comprises adjusting the position of said elements (22) to adjust the free cross section (21).

15. Tyre production process comprising:
- producing an elastomeric compound according to the method of claim 14;
- producing at least a semi-finished element using said elastomeric compound;
- producing a green tyre comprising said at least a semi-finished element;
- moulding and vulcanizing said green tyre to produce a finished tyre.

## Patentansprüche

1. Planetenmischvorrichtung (1) umfassend:
- eine zentrale Spindel (2), die eine Entwicklung entlang einer zentralen Achse (3) aufweist,
- einen Motor (4), der konfiguriert ist, um die zentrale Spindel (2) um die zentrale Achse (3) herum zu drehen,
- einen ersten (5) und einen zweiten Mischbereich (6), die in zusammenhängender Aufeinanderfolge entlang der zentralen Achse (3) angeordnet sind, wobei jeder Mischbereich (5, 6) eine jeweilige zylindrische Innenkammer koaxial zu der zentralen Achse (3) und eine jeweilige Vielzahl von Planetenspindeln (9) umfasst, die um die zentrale Spindel (3) herum angeordnet und mit dieser verzahnt sind, und
- einen Anschlagring (10), der zwischen dem ersten und dem zweiten Mischbereich (5, 6) eingefügt ist, um die Planetenspindeln (9) des ersten und des zweiten Mischbereichs (5, 6) in Position zu halten,
wobei der Anschlagring (10) eine Einstellvorrichtung (20) umfasst, umfassend eine Vielzahl von Elementen (22), die in dem Anschlagring (10) untergebracht sind, wobei die Elemente (22) in Bezug auf die zentrale Achse (3) mit mindestens einer Bewegungskomponente auf einer Querebene beweglich sind, um einen freien Querschnitt (21) zwischen dem ersten und dem zweiten Mischbereich (5, 6) in Abhängigkeit der Position der Elemente (22) zu variieren,
**dadurch gekennzeichnet, dass** jedes bewegliche Element (22) eine ebene ringförmige Form mit Entwicklung entlang einer jeweiligen Querebene aufweist und auf der Querebene um eine jeweilige Drehachse herum drehbar ist, die parallel zu der zentralen Achse verläuft.

2. Vorrichtung nach Anspruch 1, wobei die Einstellvorrichtung (20) mindestens drei bewegliche Elemente (22) und/oder nicht mehr als zehn bewegliche Elemente (22) umfasst.

3. Vorrichtung nach Anspruch 1 oder 2, wobei die Drehachsen der beweglichen Elemente (22) gegenseitig nicht zusammenfallend und in Bezug auf die zentrale Achse (3) versetzt sind.

4. Vorrichtung nach einem der vorstehenden Ansprüche, wobei die Drehachsen der beweglichen Elemente (22) gleichmäßig entlang eines auf der zentralen Achse (3) zentrierten Umfangs angeordnet sind, wobei die Drehung der beweglichen Elemente (22) synchron und zentralsymmetrisch in Bezug auf die zentrale Achse (3) ist.

5. Vorrichtung nach einem der vorstehenden Ansprüche, wobei die Einstellvorrichtung (20) ein Betätigungselement (29) umfasst, das konfiguriert ist, um sich um die zentrale Achse (3) herum zu drehen, um die beweglichen Elemente (22) in Drehung zu versetzen.

6. Vorrichtung nach Anspruch 5, wobei das Betätigungselement (29) für jedes bewegliche Element (22) einen jeweiligen Stift (37) umfasst, der in ein entsprechendes Loch (38) an dem jeweiligen beweglichen Element (22) eingreift, wobei die Stifte (37) des Betätigungselements (29) gleichmäßig entlang eines auf der zentralen Achse (3) zentrierten Umfangs angeordnet sind.

7. Vorrichtung nach einem der Ansprüche 5 und 6, wobei das Betätigungselement (29) eine ringförmige Form mit Entwicklung auf einer Querebene aufweist.

8. Vorrichtung nach einem der vorstehenden Ansprüche, wobei der Anschlagring (10) einen Gehäusekörper (23) mit zylindrischer Symmetrie in Bezug auf die zentrale Achse (3) umfasst und eine zylindrische Wand (24) und eine Stirnwand (25) umfasst, die sich auf einer jeweiligen Querebene entwickeln und eine Durchgangsöffnung (26) aufweisen, wobei die zylindrische Wand (24) und die Stirnwand (25) einen Hohlraum (27) definieren, der die Vielzahl von beweglichen Elementen (22) unterbringt, wobei die beweglichen Elemente (22) entlang der zentralen Achse (3) in gegenseitigem Kontakt gestapelt und gegen die Stirnwand (25) gelehnt sind.

9. Vorrichtung nach Anspruch 8, wobei jedes bewegliche Element (22) eine jeweilige Durchgangsöffnung (28) aufweist, die eine Querschnittsfläche aufweist, die eine Querschnittsfläche der Durchgangsöffnung (26) der Stirnwand (25) einschließt oder dieser gleich ist.

10. Vorrichtung nach Anspruch 8 oder 9, wobei sich jedes bewegliche Element (22) um eine jeweilige Drehachse herum drehen kann, die integral mit der Stirnwand (25) ist, wobei die jeweilige Drehachse durch einen jeweiligen Stift (35) gebildet wird, der zu einem von dem jeweiligen beweglichen Element (22), der Stirnwand (25) gehört und in ein jeweiliges Loch (36) eingreift, das in dem anderen von dem jeweiligen beweglichen Element (22) und der Stirnwand (25) vorgesehen ist.

11. Vorrichtung nach Anspruch 5 und einem der Ansprüche 8 bis 10, wobei auch das Betätigungselement (29) zusammen mit den beweglichen Elementen (22) entlang der zentralen Achse (3) gestapelt und in dem Hohlraum (27) auf der gegenüberliegenden Seite der beweglichen Elemente (22) in Bezug auf die Stirnwand (25) untergebracht ist, und wobei das Betätigungselement (29) eine jeweilige Durchgangsöffnung (34) aufweist, die eine Querschnittsfläche aufweist, die eine Querschnittsfläche der Durchgangsöffnung (26) der Stirnwand (25) einschließt oder dieser gleich ist.

12. Vorrichtung nach Anspruch 5 und einem der vorstehenden Ansprüche, umfassend einen Motor, der an das Betätigungselement (29) gekoppelt ist, um das Betätigungselement (29) um die zentrale Achse (3) herum in Drehung zu versetzen, wobei der Anschlagring (10) Zahnradbauteile umfasst, die zwischen dem Motor und dem Betätigungselement (29) eingefügt sind, und wobei die Mischvorrichtung (1) eine Befehls- und Steuereinheit umfasst, die programmiert und konfiguriert ist, um den Motor zu steuern.

13. Vorrichtung nach Anspruch 5 und einem der vorstehenden Ansprüche, wobei der Anschlagring (10) eine Steuerstange (30) umfasst, die eine Hauptentwicklungsachse aufweist, wobei ein radial inneres Ende (31) der Steuerstange (30) an das Betätigungselement (29) gekoppelt ist, so dass eine Drehung der Steuerstange um ihre Entwicklungsachse herum eine Drehung des Betätigungselements (29) bewirkt, wobei das radial innere Ende (31) an das Betätigungselement (29) durch eine Zahnradkopplung gekoppelt ist und wobei ein radial äußeres Ende (32) der Steuerstange (30) außerhalb des Gehäusekörpers (23) liegt.

14. Verfahren für eine Herstellung einer Elastomerverbindung, das Verfahren umfassend:
- Bereitstellen der Planetenmischvorrichtung (1) nach einem der vorstehenden Ansprüche;
- Herstellen der Elastomerverbindung mittels der Mischvorrichtung (1);
- wobei das Verfahren ein Justieren der Position der Elemente (22) umfasst, um den freien Querschnitt (21) zu justieren.

15. Reifenherstellungsprozess umfassend:
- Herstellen einer Elastomerverbindung nach dem Verfahren nach Anspruch 14;
- Herstellen mindestens eines Halbfertigelements unter Verwendung der Elastomerverbindung;
- Herstellen eines Reifenrohlings, umfassend das mindestens eine Halbfertigelement;
- Formen und Vulkanisieren des Reifenrohlings, um einen fertigen Reifen herzustellen.

## Revendications

1. Dispositif de mélange (1) planétaire comprenant :
- une broche centrale (2) ayant un développement le long d'un axe central (3),
- un moteur (4) conçu pour faire tourner la broche centrale (2) autour de l'axe central (3),
- une première (5) et une seconde section de mélange (6) disposées en succession contiguë le long de l'axe central (3), dans lequel chaque section de mélange (5, 6) comprend une chambre interne cylindrique respective coaxiale avec l'axe central (3) et une pluralité respective de broches planétaires (9) disposées autour de et s'engrenant avec la broche centrale (3), et
- une bague d'arrêt (10) interposé entre la première et la seconde section de mélange (5, 6) afin de maintenir en position les broches planétaires (9) de la première et de la seconde section de mélange (5, 6),
dans lequel la bague d'arrêt (10) comprend un dispositif de réglage (20) comprenant une pluralité de éléments (22) logés dans ladite bague d'arrêt (10), lesdits éléments (22) pouvant se déplacer par rapport à l'axe central (3) avec au moins une composante de mouvement sur un plan transversal, afin de faire varier une section transversale libre (21) entre la première et la seconde section de mélange (5, 6) en fonction de la position desdits éléments (22),
**caractérisé en ce que** chaque élément (22) mobile a une forme annulaire plane avec un développement le long d'un plan transversal respectif et peut tourner sur ledit plan transversal autour d'un axe de rotation respectif parallèle audit axe central.

2. Dispositif selon la revendication 1, dans lequel ledit dispositif de réglage (20) comprend au moins trois éléments (22) mobiles et/ou au plus dix éléments (22) mobiles.

3. Dispositif selon la revendication 1 ou 2, dans lequel les axes de rotation des éléments (22) mobiles ne coïncident pas mutuellement et sont décalés par rapport à l'axe central (3).

4. Dispositif selon l'une quelconque des revendications précédentes, dans lequel les axes de rotation des éléments (22) mobiles sont disposés de manière égale le long d'une circonférence centrée sur l'axe central (3), dans lequel ladite rotation des éléments (22) mobiles est synchrone et à symétrie centrale par rapport à l'axe central (3).

5. Dispositif selon l'une quelconque des revendications précédentes, dans lequel le dispositif de réglage (20) comprend un élément actionneur (29) conçu pour tourner autour de l'axe central (3) afin de mettre en rotation les éléments (22) mobiles.

6. Dispositif selon la revendication 5, dans lequel l'élément actionneur (29) comprend pour chaque élément (22) mobile une goupille (37) respective qui vient en prise avec un trou (38) correspondant sur chaque élément (22) mobile, dans lequel lesdites goupilles (37) de l'élément actionneur (29) sont disposées de manière égale le long d'une circonférence centrée sur l'axe central (3).

7. Dispositif selon l'une quelconque des revendications 5 et 6, dans lequel l'élément actionneur (29) a une forme annulaire avec un développement sur un plan transversal.

8. Dispositif selon l'une quelconque des revendications précédentes, dans lequel ladite bague d'arrêt (10) comprend un corps de boîtier (23) à symétrie cylindrique par rapport audit axe central (3) et comprenant une paroi cylindrique (24) et une paroi d'extrémité (25) se développant sur un plan transversal respectif et ayant une ouverture traversante (26), dans lequel la paroi cylindrique (24) et la paroi d'extrémité (25) définissent une cavité (27) qui loge ladite pluralité d'éléments (22) mobiles, dans lequel les éléments (22) mobiles sont empilés le long de l'axe central (3) en contact mutuel avec et s'appuyant contre la paroi d'extrémité (25).

9. Dispositif selon la revendication 8, dans lequel chaque élément (22) mobile a une ouverture traversante (28) respective ayant une superficie de section transversale comportant, ou égale à, une superficie de section transversale de l'ouverture traversante (26) de la paroi d'extrémité (25).

10. Dispositif selon la revendication 8 ou 9, dans lequel chaque élément (22) mobile peut tourner autour d'un axe de rotation respectif solidaire de ladite paroi d'extrémité (25), ledit axe de rotation respectif étant réalisé par une goupille (35) respective, appartenant à l'un de l'élément (22) mobile respectif et de la paroi d'extrémité (25), qui vient en prise avec un trou (36) respectif, prévu dans l'autre de l'élément (22) mobile respectif et de la paroi d'extrémité (25).

11. Dispositif selon la revendication 5 et l'une quelconque des revendications 8 à 10, dans lequel l'élément actionneur (29) est également empilé ensemble avec les éléments (22) mobiles le long de l'axe central (3) et logé à l'intérieur de ladite cavité (27) au niveau d'un côté opposé des éléments (22) mobiles par rapport à ladite paroi d'extrémité (25), et dans lequel l'élément actionneur (29) a une ouverture traversante (34) respective ayant une superficie de section transversale comportant, ou égale à, une superficie de section transversale de l'ouverture traversante (26) de la paroi d'extrémité (25).

12. Dispositif selon la revendication 5 et l'une quelconque des revendications précédentes, comprenant un moteur accouplé audit élément actionneur (29) pour mettre en rotation l'élément actionneur (29) autour de l'axe central (3), dans lequel la bague d'arrêt (10) comprend des éléments d'engrenage interposés entre le moteur et ledit élément actionneur (29) et dans lequel le dispositif de mélange (1) comprend une unité de commande et de contrôle programmée et conçue pour commander ledit moteur.

13. Dispositif selon la revendication 5 et l'une quelconque des revendications précédentes, dans lequel la bague d'arrêt (10) comprend une tige de commande (30) ayant un axe de développement principal, dans lequel une extrémité radialement interne (31) de la tige de commande (30) est accouplée audit élément actionneur (29) de sorte qu'une rotation de la tige de commande autour de son axe de développement provoque une rotation de l'élément actionneur (29), dans lequel ladite extrémité radialement interne (31) est accouplée audit élément actionneur (29) par le biais d'un accouplement à engrenages et dans lequel une extrémité radialement externe (32) de la tige de commande (30) est située à l'extérieur dudit corps de boîtier (23).

14. Procédé de production d'un composé élastomère, le procédé comprenant :
- la fourniture du dispositif de mélange (1) planétaire selon l'une quelconque des revendications précédentes ;
- la production dudit composé élastomère au moyen dudit dispositif de mélange (1) ;
- dans lequel le procédé comprend le réglage de la position desdits éléments (22) afin de régler la section transversale libre (21).

15. Procédé de production de pneu comprenant :
- la production d'un composé élastomère selon le procédé selon la revendication 14 ;
- la production d'au moins un élément semi-fini à l'aide dudit composé élastomère ;
- la production d'un pneu cru comprenant ledit au moins un élément semi-fini ;
- le moulage et la vulcanisation dudit pneu cru afin d'obtenir un pneu fini.
